Europäisches Patentamt

European Patent Office

Office européen des brevets

(11) Veröffentlichungsnummer: **0 053 746**
**A2**

(12) # EUROPÄISCHE PATENTANMELDUNG

(21) Anmeldenummer: **81109815.1**

(22) Anmeldetag: **21.11.81**

(51) Int. Cl.³: **F 24 J 3/02**
**F 24 D 11/02**

(30) Priorität: **24.11.80 DE 3044169**

(43) Veröffentlichungstag der Anmeldung:
**16.06.82 Patentblatt 82/24**

(84) Benannte Vertragsstaaten:
**AT BE CH DE FR GB IT LI LU NL SE**

(71) Anmelder: **Drefahl, Jens**
**Amselweg 18a**
**D-6458 Rodenbach 2(DE)**

(72) Erfinder: **Drefahl, Jens**
**Amselweg 18a**
**D-6458 Rodenbach 2(DE)**

(74) Vertreter: **Schumacher, Bernd, Dipl.-Ing.**
**Am Schwaberg 13**
**D-6450 Hanau 6(DE)**

(54) **Verfahren und Einrichtung zum Optimieren des Wärmehaushalts von Gebäuden.**

(57) Hierbei wird bei Gebäuden mit Flach- oder Schrägdächern, die oberhalb einer Dachhaut mit einer befeuchtbaren, vorzugsweise begrünbaren Bodenschicht abgedeckt sind, diese als wärmeleitender Wärmeabsorber sowie -speicher für von außen auftreffende Primärenergie und/oder für aus dem Gebäude abströmende Rückgewinnungsenergie zum Heizen und/oder Kühlen des Gebäudes ausgenutzt. Hierzu befindet sich in oder unter der Bodenschicht (18) ein zweckmäßigerweise flüssigkeitsdurchströmtes Wärmeableitungsmittel (20), wie ein Rohrschlangensystem oder ein die Bodenschicht aufnehmendes Plattensystem. Dieses kann durch entsprechende oberseitige Formgebung gleichzeitig bei Schrägdächern als Abrutschhemmung für die Bodenschicht und insbesondere bei Flachdächern als ein den Sonneneinstrahlungswinkel verbesserndes Mittel eingesetzt werden. Der Wärmeentzug aus der Bodenschicht erfolgt vorzugsweise mittels eines Wärmepumpensystems sowie eines Wärmezwischenspeichers durch bedarfsabhängige Steuerung oder Regelung. Die Wärmezufuhr aus dem Gebäude kann über die Dachisolierung oder auch über eine bodenunterseitige, hohlraumreiche Dränage bzw. ein gesondertes Rohrsystem direkt oder indirekt zu der Bodenschicht erfolgen.

FIG. 1

## Beschreibung

Die Erfindung betrifft ein Verfahren zum Optimieren des Wärmehaushalts von Gebäuden mit Flach- oder Schrägdächern, die oberhalb einer Dachhaut mit einer befeuchtbaren, vorzugsweise begrünbaren, Bodenschicht abgedeckt sind, und eine diesbezügliche Einrichtung.

Als Dachabdeckungen dienende Bodenschichten haben sich insbesondere in Verbindung mit einer Bepflanzung in mehrfacher Hinsicht als sehr vorteilhaft erwiesen und werden in zunehmendem Maße eingesetzt. Sie ermöglichen einen guten Wärme- sowie Kälteschutz wie auch einen Witterungsschutz für den darunter befindlichen Dachaufbau. Außerdem führen Dachbepflanzungen zu einer erheblichen Verbesserung des Umweltklimas insbesondere in dicht besiedelten Gegenden.

Im Rahmen der vorliegenden Erfindung wurde festgestellt, daß derartige Bodenschichten auf Dächern eine maßgebliche thermische Pufferwirkung haben. Das bedeutet, daß sich die Bodenschicht bei längerer Sonnenbestrahlung oder auch aufgrund der Außentemperatur allmählich aufheizt. Somit kann die von außen auftreffende Wärmeenergie nur zeitlich verzögert über das im übrigen in üblicher Weise wärmegedämmte Dach in das Gebäude eindringen. Die Größe dieser zeitlichen Pufferwirkung steigt mit der Dicke der Bodenschicht. Entsprechendes gilt auch für beispielsweise nachts aus dem Gebäude über das Dach in die Bodenschicht eintretende Verlustwärme, die ebenfalls zeitlich verzögert aus der Bodenschicht an die Umgebung abgegeben werden kann.

Da die Bodenschicht schon aus Gewichts- sowie Kostengründen eine relativ begrenzte Dicke und damit zeitliche Pufferwirkung hat,
ist es unvermeidbar, daß in vorwiegend warmen Jahreszeiten ein
unerwünschter überwiegender Wärmefluß von außen über das Dach
ins Gebäudeinnere erfolgt, während in überwiegend kalten Jahreszeiten und nachts ein dachbedingter Energieverlust hingenommen
werden muß. Im ersten Fall führt die umweltbedingte Überschußwärme zu einer nicht gewollten Temperaturerhöhung im Gebäude,
und im zweiten Fall muß die auftretende Verlustwärme zur Temperaturkonstanthaltung ausgeglichen werden.

Die Aufgabe der vorliegenden Erfindung besteht deshalb darin,
den Wärmehaushalt von Gebäuden mit derartigen Dach-Bodenschichten zu verbessern und die genannten Nachteile mit relativ einfachen Mitteln durch Optimierung der energetischen Verhältnisse
zu vermeiden.

Zur Lösung der gestellten Aufgabe zeichnet sich ein Verfahren
der im Oberbegriff genannten Art erfindungsgemäß dadurch aus,
daß die Bodenschicht als wärmeleitender Wärmeabsorber sowie
-speicher für von außen auftreffende Wärmeenergie sowie gegebenenfalls für aus dem Gebäude, insbesondere über die Dachhaut,
abfließende Wärmeenergie eingesetzt und ihr für Heizzwecke und/
oder zum Kühlen des Gebäudes Wärmeenergie als Primärenergie und/
oder als Rückgewinnungsenergie gezielt entzogen wird. Diese Maßnahme eignet sich sowohl für dicke, wie auch für dünne Bodenschichten und ist ausgesprochen einfach, da die gesamte Bodenschicht in ihrer Funktion als Wärmeabsorber sowie -speicher ausgenutzt wird. Wenn die Bodenschicht durch die Außentemperatur
bzw. durch eine Sonneneinstrahlung erwärmt wird, kann Wärmeenergie für die Gebäudebeheizung und/oder die Warmwasserbereitung entzogen werden. Hierdurch wird ein übermäßiges Aufheizen der
Bodenschicht vermieden, was insbesondere dann vorteilhaft ist,
wenn diese realtiv dünn ist und somit eine vergleichbar kleine
zeitliche Pufferwirkung hat. Dadurch kann die Raumtemperatur
insbesondere im Sommer auf einem niedrigeren Niveau gehalten werden. Ein erhöhter Wärmeenergieentzug führt ferner zu einer spürbaren Abkühlung der Bodenschicht, was ebenfalls insbesondere im
Sommer eine Verbesserung des Raumklimas im Gebäude bedingt. Im
übrigen kann die in die Bodenschicht von außen eintretende Primärenergie durch gezieltes Entziehen derselben und durch bedarfsgerechtes Zuführen zu den einzelnen Wärmeverbrauchern wesentlich
günstiger ausgenutzt werden. Ferner ermöglicht der Bodenschicht-
Absorber ein Rückgewinnen der aus dem Gebäude zum Beispiel über
das Dach in die Bodenschicht abfließenden Verlustwärme, die somit wieder in den Wärmekreislauf des Gebäudes eingespeist werden
kann. Die Tatsache, daß die befeuchtbare Bodenschicht wärmeleitend ist, führt zu einer guten Wärmespeicherung derselben und ermöglicht einfache Mittel zum Abziehen von Wärmeenergie, ohne daß
hierdurch die Begrünbarkeit der Bodenschicht beeinflußt wird.

Es ist bevorzugt, daß die entzogene Wärmeenergie gespeichert
wird. Dadurch kann die gewonnene Primärenergie bzw. die Rückgewinnungsenergie bedarfsgerecht eingesetzt und abgerufen werden,
beispielsweise im Sommer überwiegend zur Warmwasserbereitung und
im Winter überwiegend zur Gebäudebeheizung.

Eine besonders zweckmäßige Ausführungsform des erfindungsgemäßen
Verfahrens zeichnet sich dadurch aus, daß die entzogene Wärmeenergie mittels eines Wärmepumpensystems auf ein höheres Temperaturniveau gebracht wird. Hierdurch ist es möglich, die Bodenschicht im wesentlichen ganzjährig als Wärmeabsorber auszunutzen und Heiz- und/oder Brauchwasser ausreichender Temperatur zu erzeugen. Selbst in der kalten Jahreszeit genügt eine nur relativ geringfügige Sonnenbestrahlung, um die vergleichsweise dünne Bodenschicht auf eine für ein Wärmepumpensystem ausreichende Temperatur zu erwärmen. Abgesehen davon kann insbesondere bei relativ schlechten wärmegedämmten Dächern die abfließende Verlustwärme des Gebäudes rückgewonnen werden.

In weiterer Ausgestaltung wird das Entziehen der Wärmeenergie vorzugsweise umwelt- und/oder bedarfsabhängig gesteuert bzw. geregelt. So kann beispielsweise in der warmen Jahreszeit und insbesondere bei Sonneneinstrahlung ein erhöhter Wärmeentzug zweckmäßig sein, um die Bodenschicht abzukühlen und somit ein günstigeres Raumklima des Gebäudes zu erzielen. Gleichzeitig ergibt sich dabei eine große Wärmeenergiemenge beispielsweise zur Brauchwassererwärmung. In der kühlen Jahreszeit kann dagegen der Bodenschicht in bedarfsgerechter Weise gerade so viel Wärme entzogen werden, wie sie für Heizzwecke oder zur Wärmerückgewinnung der auftretenden Verlustwärme benötigt wird. Die Steuerung bzw. Regelung des Wärmeentzuges kann in Abhängigkeit von gemessenen sowie eingegebenen Betriebsparametern erfolgen.

Grundsätzlich ist es möglich, den Wärmeentzug in der Bodenschicht großflächig vorzunehmen. Wegen der Wärmeleitung der Bodenschicht ist es jedoch zweckmäßiger, dieser die Wärmeenergie nur an bestimmten Bereichen zu entziehen, was möglich ist, da sich die Wärmeenergie gleichmäßig in der Bodenschicht verteilt. Die örtlich begrenzten Wärmeentnahmestellen der insgesamt als Absorber arbeitenden Bodenschicht sind einfach und führen zu keinerlei negativen Beeinflussung eines Pflanzenbewuches der Bodenschicht.

Gemäß einer weiteren Ausführungsform des erfindungsgemäßen Verfahrens wird der Bodenschicht Wärmeenergie von Verlustwärme abgebenden anderen Gebäudeteilen gezielt direkt oder indirekt zugeleitet. Auf diese Weise ist es möglich, den gesamten Wärmehaushalt weiter zu verbessern und praktisch jede beliebige Verlustwärmequelle einzubeziehen. In diesem Zusammenhang ist es besonders bevorzugt, daß im Kamin- bzw. Schornsteinbereich entstehende Verlustwärme über die Abgase der Bodenschicht zugeführt und/oder auf ein Strömungsmedium, insbesondere Luft, übertragen und mittels dieser der Bodenschicht zugeleitet wird. Auf diese Weise kann die sonst verloren gehende Verbrennungsabgaswärme zumindest teilweise rückgewonnen werden, und zwar unter Mehrfachausnutzung des ohnehin vorhandenen Bodenschicht-Absorbers. Diese Maßnahme ist insbesondere in Zeiten unzureichender Primärenergiezuführung zu der Bodenschicht vorteilhaft, und es kann hierzu die Verlustwärme praktisch jeder beliebigen Brennstelle benutzt werden, die beispielsweise mit Holz, Kohle, Öl, Gas oder dergleichen arbeitet und einerseits für eine Raumerwärmung sowie andererseits für ein thermisches Aufladen der Bodenschicht sorgt.

Bei einer praktischen Ausführungsform des erfindungsgemäßen Verfahrens ist es bevorzugt, daß abgaserwärmte Luft insbesondere unter Ausnutzung ihrer thermisch bedingten Eigenströmung direkt unterhalb der Bodenschicht und in Wärmeaustauschbeziehung hiermit gleichmäßig verteilt durch eine Dränage bzw. Luftschicht geleitet wird. Auf diese Weise wird die luftdurchlässige Dränage gleichzeitig als Mittel zum Ableiten der erwärmten Luft benutzt, wobei ständig ein Wärmeaustausch zwischen der erwärmten Luft und der Bodenschicht erfolgt. Ein solches Verfahren ist ausgesprochen einfach und leicht sowie preiswert zu realisieren.

Zur Lösung der gestellten Aufgabe zeichnet sich ferner eine Einrichtung zum Optimieren des Wärmehaushalts von Gebäuden mit Flach- oder Schrägdächern durch eine Dachabdeckung mit einer befeuchtbaren und als wärmeleitender Wärmeabsorber sowie -speicher arbeitenden Bodenschicht und durch ein mit dieser in direktem Wärmekontakt befindliches Wärmeableitungsmittel aus. Eine derartige wärmetechnische Gebäudeeinrichtung ist im Vergleich zu herkömmlichen Energiedächern relativ preiswert und unter Berücksichtigung der vorstehenden Ausführungen in vielfältiger Hinsicht wesentlich vorteilhafter. Beispielsweise lassen sich hierdurch die optischen Verhältnisse, ferner die umwelt- sowie raumklimatischen Bedingungen und die energetischen Eigenschaften in hervorragender Weise miteinander kombinieren. Bei optimalem Witterungs- sowie Wärmeschutz ergibt sich hierdurch ein ökologisch höchst wertvolles Energiedach.

Vorzugsweise besitzt die Einrichtung ein in die Bodenschicht integriertes und von einem Wärmeableitungsmedium, wie gefriergeschütztem Wasser, durchströmtes Rohrsystem als Wärmeableitungsmittel. Abgesehen davon, daß auch andersartige Wärmeableitungsmittel denkbar sind, lassen sich grundsätzlich auch andere Flüssigkeiten und Gase als Wärmeableitungsmedien einsetzen.

Wegen der Wärmeleitung der Bodenschicht ist es möglich, ein nur an verteilten Teilbereichen Wärmeenergie entziehendes Rohrsystem, beispielsweise ein schlangenförmiges Rohrsystem, einzusetzen. Hierdurch werden die Material-, Installations- sowie Wartungskosten reduziert, ohne die Wirksamkeit des Wärmeentzuges zu beeinflussen. Die nur stellenweise angeordneten Wärmeableitungsmittel haben darüber hinaus den Vorteil, daß sie einen möglichen Pflanzenbewuchs der Bodenschicht in keiner Weise beeinträchtigen.

Grundsätzlich ist es jedoch auch möglich, ein großflächiges, plattenförmiges Wärmeableitungsmittel unterhalb der Bodenschicht vorzusehen. Dieses Wärmeableitungsmittel kann gleichzeitig der Träger für die Bodenschicht sein und ist dann mit einer Perforierung zu versehen, falls übermäßiges Wasser aus der Bodenschicht nach unten abgeleitet werden soll.

Um eine gute Wärmeleitung der Bodenschicht auch dann zu gewährleisten, wenn diese relativ trocken ist, kann es vorteilhaft sein, in der Bodenschicht die Wärmeleitung begünstigende Glieder oder Stoffe vorzusehen. Beispielsweise lassen sich metallische Bodenschichteinlagen, wie Matten oder dergleichen, als wärmeleitende Glieder verwenden. Diese können auch mit dem Wärmeableitungsmittel verbunden und beispielsweise als Rippen eines Rohrsystems ausgebildet sein. Solche die Wärmeleitung der Bodenschicht begünstigende Glieder oder Stoffe ermöglichen eine weitere Reduzierung der Wärmeentzugsstellen und vermeiden eine notwendige Bewässerung der Bodenschicht zum Erzielen einer ausreichenden Wärmeleitung.

Vorzugsweise sollte die nach außen weisende Oberfläche der Bodenschicht unter einem günstigen Einfallswinkel für das Absorbieren von Solarenergie ausgerichtet sein. In diesem Zusammenhang kann es insbesondere bei Flachdächern vorteilhaft sein, die nach aussen weisende Oberfläche schräg zur Dachhaut verlaufen zu lassen. Um jedoch ein Flachdach auf diese Weise nicht insgesamt zu einem Schrägdach umbauen zu müssen, ist es ferner möglich, die nach außen weisende Oberfläche sägezahnartig abgestuft anzuordnen. Hierdurch lassen sich aneinander angrenzende Bodenschicht-Reihen erzielen, die alle eine optimale Sonnenausrichtung haben.

In weiterer Ausgestaltung ist es möglich, daß die Stufen der Sägezahnform durch Wärmeableitungsmittel formstabilisiert sind. Auf diese Weise haben die Wärmeableitungsmittel eine Mehrfachfunktion, da sie einerseits zur Wärmeableitung und andererseits zum Halten der sägezahnförmigen Bodenschicht dienen. Außerdem können sie bei entsprechender Anordnung sowie Ausbildung gegebenenfalls auch für eine direkte Wärmeabsorption sorgen.

Bei einer weiteren Ausführungsform ist ein die Bodenschicht aufnehmender Bodenschichtträger sägezahnförmig ausgebildet. Dadurch ergibt sich die für die Sonneneinstrahlung günstige Sägezahnform der auf dem Träger befindlichen Bodenschicht von selbst. Außerdem ist es hierbei möglich, daß der sägezahnförmige Bodenschichtträger bereits als Wärmeableitungsmittel ausgebildet ist. Hierdurch können weitere Glieder innerhalb der Bodenschicht entfallen.

Ferner kann es zweckmäßig sein, daß bei Schrägdächern die Wärmeableitungsmittel und/oder der Bodenschichtträger für die Bodenschicht abrutschhemmend ausgebildet sind. Durch diese Maßnahme werden zusätzliche Halterungsmittel für die Bodenschicht vermieden, und es läßt sich hierbei beispielsweise ebenfalls ein sägezahnförmiger Bodenschichtträger einsetzen. Außerdem kann hierdurch bei zu steilen und zu flachen Schrägdächern der optimale Sonneneinfallswinkel verbessert werden.

Um ein zu starkes Befeuchten der Bodenschicht zu vermeiden und einen günstigen Pflanzenwuchs zu gewährleisten, ist es auch im Hinblick auf eine günstige Wärmeleitung zweckmäßig, daß die Bodenschicht oberhalb einer über der Dachhaut befindlichen Dränage
angeordnet ist. Grundsätzlich ist es dabei möglich, ein wasserdurchlässiges, vorzugsweise filterndes, Wärmeableitungsmittel
als Trennung zwischen der Bodenschicht und der Dränage vorzusehen. Insgesamt dürfte jedoch ein in der Bodenschicht verlegtes
Rohrsystem, wie eine Rohrschlange, im Hinblick auf Kosten und
Wartung günstiger sein.

In weiterer Ausgestaltung besitzt die Einrichtung eine das Wärmeableitungsmittel mit Wärmeverbrauchern verbindende Heizzentrale und ein diese in Abhängigkeit von Betriebsparametern, wie
der Temperatur der Bodenschicht bzw. des Wärmeableitungsmediums,
betätigendes Steuer- oder Regelgerät. Dabei kann die Heizzentrale mit einem Wärmespeicher und/oder einem Wärmeaustauscher und/
oder einer Wärmepumpe versehen sein. Eine solche Einrichtung ermöglicht eine optimale Energieausnutzung und kann im Bedarfsfall an ein normales Heizsystem angeschlossen werden.

In weiterer Ausgestaltung ist vorzugsweise ein Rohrsystem vorhanden, das ein durch Verlustwärme erwärmtes Strömungsmittel
durch die Bodenschicht und/oder durch eine darunter befindliche
Dränage bzw. Luftschicht leitet. Dieses Rohrsystem ermöglicht
eine Mehrfachausnutzung des Bodenschicht-Wärmeabsorbers und ein
Rückgewinnen von sonst ungenutzter Wärmeenergie. Eine besonders
zweckmäßige diesbezügliche Ausführungsform ist gekennzeichnet
durch einen Abgas/Luft-Wärmeaustauscher in einem Kamin- bzw.
Schornsteinbereich mit einem Frischlufteinlaß und einem in die
Dränage bzw. Luftschicht einmündenden und/oder durch die Bodenschicht geführten Strömungsverteiler. Unabhängig von der jewei-

ligen Art der Brennstelle kann somit die im Abgas vorhandene Wärmeenergie zumindest teilweise rückgewonnen werden, indem sie in einfacher Weise der Bodenschicht zugeführt wird. In diesem Zusammenhang besitzt eine besonders einfache Ausführungsform, die sich vor allem für ein Schrägdach eignet, einen aufsteigenden Wärmeaustauscher mit einem unteren Frischlufteinlaß sowie einem oberen, in eine schräg aufsteigende Dränage bzw. Luftschicht unten einmündenden Strömungsverteiler und einen oberen Luftauslaß der Dränage bzw. Luftschicht. Auf diese Weise ergibt sich eine thermisch bedingte Eigenströmung, und es kann auf zusätzliche Zwangsströmungsmittel verzichtet werden.

Bei einer alternativen Ausführungsform ist ein Abgas als das Strömungsmittel aus einem Kamin- bzw. Schornsteinbereich leitendes feuerfestes, gasdichtes und witterungsbeständiges Rohrsystem vorhanden. Dieses leitet das warme bzw. heiße Abgas direkt durch den Bereich der Dränage bzw. der Bodenschicht, so daß ein zwischengeschalteter Wärmeaustauscher entfallen kann. Eine solche Maßnahme ist insbesondere dann zweckmäßig, wenn eine weitgehend rückstandsfreie Verbrennung erfolgt und ein Reinigen von Abgaskanälen im wesentlichen entfallen kann, wie bei einer mit gasförmigen Brennstoffen arbeitenden Brennstelle.

Für die Zuführung der Verlustwärme zu der Bodenschicht kann demnach eine thermisch bedingte Eigenströmung benutzt werden. Stattdessen oder zusätzlich ist es auch möglich, dem Strömungsmittel durch Zusatzglieder, wie Ventilatoren oder dergleichen, eine Zwangsströmung aufzuprägen. Um ein thermisch möglichst schnell ansprechendes System mit wenigen Wärmeverlusten zu erhalten, kann es vorteilhaft sein, ein in unmittelbarer Nähe des Wärmeableitungsmittels verlaufendes und/oder mündendes Rohrsystem zu benutzen. Dadurch kann die Verlustwärme im wesentlichen direkt dem Wärmeableitungsmittel zugeleitet werden, ohne daß hierzu mehrere thermische Übergangswiderstände überbrückt werden müssen. Ein besonders wirksames System liegt dann vor, wenn das vom Abgas durchströmte Rohrsystem in unmittelbarer Nähe des Wärmeableitungsmittels verläuft.

In weiterer Ausgestaltung sollte eine die Wärmeabsorption der Bodenschicht zulassende oder fördernde und eine insbesondere windbedingte Oberflächenauskühlung der Bodenschicht reduzierende Bepflanzung gewählt werden. In diesem Zusammenhang ist es beispielsweise denkbar, daß eine grasartige, also im wesentlichen blattlose, Bepflanzung die Sonneneinstrahlung weitgehend ungehindert auf die Bodenschicht auftreffen läßt und gleichzeitig eine auskühlende Windströmung im bodennahen Grenzbereich verhindert. Andererseits ist auch die Anwendung einer direkt wärmeabsorbierenden Bepflanzung denkbar, so daß die Wärmeenergie in indirekter Weise von außen über die Bepflanzung in die Bodenschicht übergeht und infolge der thermisch schützenden Bepflanzung in der Bodenschicht gehalten wird.

Und schließlich wird zur Lösung der gestellten Aufgabe erfindungsgemäß die Anwendung einer mit der oberseitigen Bodenschicht eines begrünbaren Daches in Wärmekontakt zu bringenden üblichen Wärmegewinnungsanlage zum gezielten Abziehen von nutzbarer Wärmeenergie aus der Bodenschicht vorgeschlagen. Dadurch können herkömmliche Mittel zum Praktizieren der vorliegenden Erfindung und zum Erzielen der mit derartigen ökologischen Energiedächern verbundenen erheblichen Vorteile eingesetzt werden.

Die Erfindung wird nachfolgend an zeichnerisch dargestellten Ausführungsbeispielen näher erläutert. Es zeigen:

Figur 1 - in einem Teilschnitt den grundsätzlichen Aufbau eines mit einer Ausführungsform der erfindungsgemäßen Einrichtung ausgerüsteten ökologischen Energiedaches,

Figur 2 - in einer Schemadarstellung eine mögliche Ausführungsform eines Steuerungs- oder Regelungssystems der erfindungsgemäßen Einrichtung,

Figuren 3 und 4 - Ausführungsformen der erfindungsgemäßen Einrichtung zum Verbessern des Sonneneinfallswinkels und

Figur 5 - eine weitere Ausführungsform der erfindungsgemäßen Einrichtung mit einer gleichzeitigen Ausnutzung von Kamin- bzw. Schornsteinabwärme.

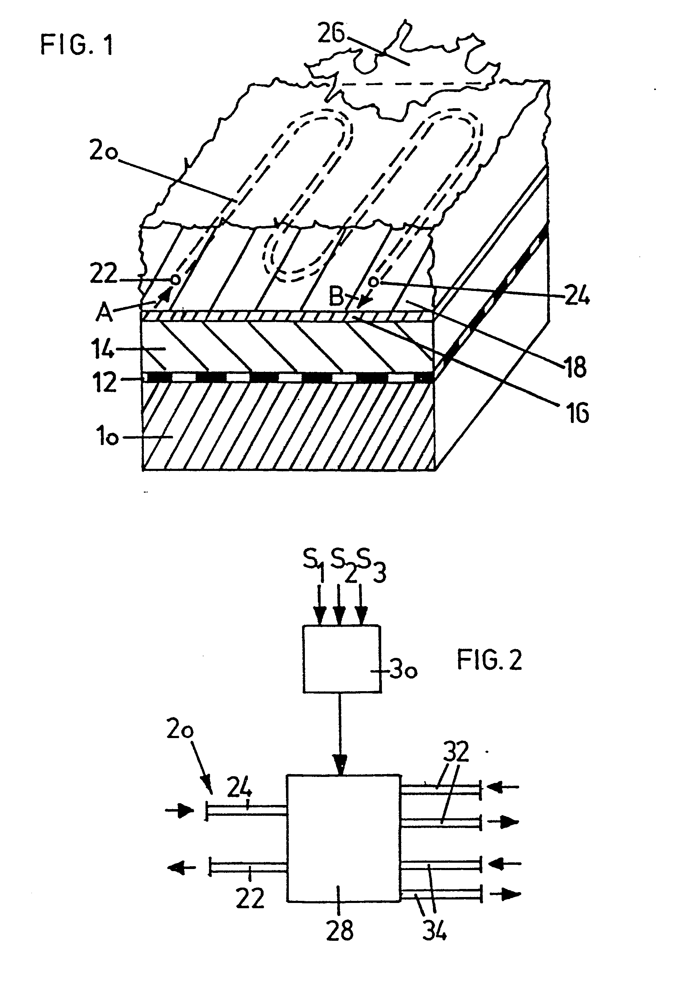

Gemäß Figur 1 ist eine tragende Dachkonstruktion 10, die bereits eine ausreichende Wärmedämmung beinhalten kann, oberseitig von einer Dachhaut 12 abgedeckt. Auf der Dachhaut 12 befindet sich eine Dränage 14, die beispielsweise aus grobkörnigem Kies, Dränplatten oder einem anderen geeigneten Material bestehen kann. Ein über der Dränage 14 befindlicher wasserdurchlässiger Bodenschichtträger 16 dient zum Aufnehmen einer darüber angeordneten Bodenschicht 18 und hat vorzugsweise eine filternde Wirkung, damit das aus der Bodenschicht 18 in die Dränage 14 abfließende Wasser weitgehend frei von Bodenbestandteilen ist.

Die Bodenschicht 18 kann aus üblichem Erdreich oder aus einem künstlichen Bodenmaterial bestehen, das sich für eine Bepflanzung eignet. Die Dicke der Bodenschicht 18 kann den jeweiligen Verhältnissen angepaßt werden und beispielsweise etwa 10 bis 20 cm betragen. In die Bodenschicht ist ein Wärmeableitungsmittel 20 eingelassen, das im vorliegenden Fall aus einer gestrichelt dargestellten metallischen Rohrschlange besteht, die einen Einlaß 22 und einen Auslaß 24 für ein in Pfeilrichtung A, B hindurchströmendes Wärmeableitungsmedium, wie gefriergeschütztes Wasser, hat. Aufgrund der Wärmeleitung der Bodenschicht 18 und des direkten Wärmekontakts mit dem Wärmeableitungsmittel 20 sowie dem darin befindlichen Wärmeableitungsmedium wird trotz der gegenseitigen Abstände zwischen den Rohrabschnitten der Rohrschlange ein wirksamer Wärmeentzug in der gesamten Bodenschicht 18 sichergestellt. Diese wirkt insgesamt als wärmeleitender Wärmeabsorber sowie -speicher, dem über das Wärmeableitungsmittel 20 Wärmeenergie in bedarfsgerechter Weise entzogen werden kann. Da sich die Rohrschlange des Wärmeableitungsmittels 20 nur an einzelnen Bereichen innerhalb der Bodenschicht 18 befindet, wird ein möglicher Pflanzenbewuchs 26 in keiner Weise beeinträchtigt.

Zur Verbesserung der Wärmeleitung der Bodenschicht 18 ist es möglich, deren Feuchtigkeitsgehalt zu erhöhen und/oder geeignet Glieder, wie metallische Matten, einzulegen, die sich überdies mit der Rohrschlange verbinden lassen. Auch kann die Rohrschlange mit nicht dargestellten, oberflächenvergrößernden Rippen oder dergleichen versehen sein. Stattdessen oder zusätzlich ist es auch möglich, daß der Bodenschichtträger 16 selbst als großflächiges Wärmeableitungsmittel ausgebildet ist.

Gemäß Figur 2 sind die Ein- sowie Auslässe 22, 24 des Wärmeableitungsmittels 20 mit einer Heizzentrale 28 kreislaufförmig verbunden, die vorzugsweise eine Wärmepumpe und einen geeigneten

Speicher für mittels der Wärmepumpe erzeugtes Wasser höherer Temperatur enthält. Die Heizzentrale 28 ist an ein Steuer- oder Regelgerät 30 angeschlossen, das über gemessene und/oder eingegebene Betriebsparameter $S_1$, $S_2$, $S_3$ für eine geeignete Steuerung oder Regelung sorgt. Bei den Betriebsparametern kann es sich beispielsweise um Temperaturen des Gebäudes, der Umgebung sowie der Bodenschicht handeln. In Abhängigkeit von diesem Steuerungs- oder Regelungsvorgang läßt sich die in der Heizzentrale 28 gespeicherte Wärmeenergie bedarfsgerecht auf einen Heizkreislauf 32 und/oder einen Brauchwasserkreislauf 34 verteilen.

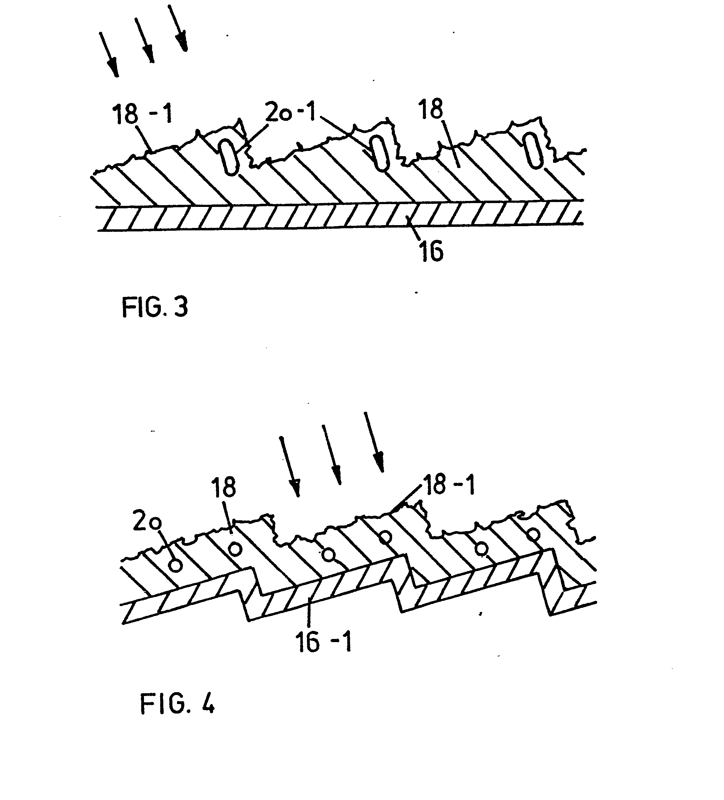

Bei der Ausführungsform aus Figur 3 befindet sich auf einem horizontal angeordneten Bodenschichtträger 16 eine Bodenschicht 18 mit einer sägezahnförmig abgestuften Oberfläche 18-1. Die Stufen der Sägezahnform werden im vorliegenden Fall von einer geeigneten Rohrschlange eines Wärmeableitungsmittels 20-1 formstabilisierend begrenzt. Durch eine derartige Schrägstellung der Oberfläche 18-1 läßt sich erreichen, daß die hauptsächlich in Pfeilrichtung auftreffende Sonneneinstrahlung optimal von der Bodenschicht 18 absorbiert wird. Auch kann die Rohrschlange so ausgebildet und an die Umgebung angrenzend angeordnet sein, daß sie für eine zumindest teilweise direkte Wärmeabsorption sorgt.

Bei der Ausführungsform aus Figur 4 wird stattdessen ein sägezahnförmiger Bodenschichtträger 16-1 eingesetzt, auf dem die Bodenschicht 18 im Unterschied zu Figur 3 in etwa gleicher Dicke aufgebracht ist. Auch hier entsteht eine sägezahnförmig angeordnete Oberfläche 18-1 mit einer optimalen Ausrichtung zur Sonneneinstrahlung. Das Wärmeableitungsmittel 20, beispielsweise eine Rohrschlange, kann gemäß der Darstellung in Figur 4 in die Bodenschicht 18 integriert sein. Stattdessen ist es jedoch auch
möglich, daß der Bodenschichtträger 16-1 selbst als Wärmeableitungsmittel ausgebildet ist.

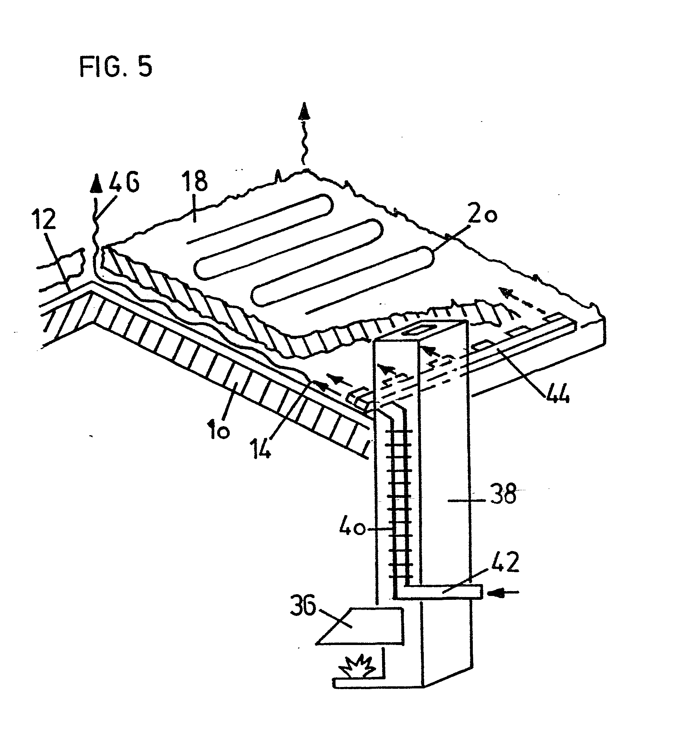

In Figur 5 ist eine Ausführungsform der erfindungsgemäßen Einrichtung im Zusammenhang mit einem Schrägdach dargestellt. Oberhalb einer diesbezüglichen tragenden Dachkonstruktion 10, die
mit einer Dachhaut 12 abgedeckt ist, befindet sich eine von der
Traufseite zu der Firstseite aufsteigende, eine Luftschicht bildende Dränage 14. Oberhalb derselben ist über einen nicht dargestellten Bodenschichtträger die Bodenschicht 18 mit dem Wärmeableitungsmittel 20 angeordnet, das im vorliegenden Fall wiederum
als Rohrschlange dargestellt ist. In einem mit einem Kamin 36
oder einer sonstigen Brennstelle verbundenen Schornstein 38 befindet sich ein aufsteigender, hochwirksamer Wärmeaustauscher
40 mit einem unterseitigen Frischlufteinlaß 42. Oberseitig mündet der Wärmeaustauscher 40 in einen Luftverteiler 44, der dafür
sorgt, daß die thermisch bedingte Zwangsströmung der im Wärmeaustauscher 40 vom heißen Abgas erwärmten Luft möglichst gleichmäßig über die Dränage 14 bzw. Luftschicht verteilt wird. Die in
diese eintretende Warmluft durchströmt die Dränage 14 bzw. Luftschicht, um aus dieser aus einem firstseitigen Luftauslaß 46
auszutreten. Demnach erfordert die in Figur 5 dargestellte Ausführungsform keinerlei Zwangsströmungsmittel, wie einen Ventilator oder dergleichen. Vielmehr wird die durch Wärmeaustausch erwärmte Luft selbsttätig  nach oben geleitet und in Wärmeaustauschbeziehung mit der Bodenschicht bzw. dem Wärmeableitungsmittel 20 gebracht.

Im Zusammenhang mit dem aus Figur 5 ersichtlichen Prinzip sind vielfältige Ausführungsformen denkbar. Beispielsweise können Zwangsströmungsmittel, wie Ventilatoren oder dergleichen, benutzt werden, um die erwärmte Luft oder ein sonstiges erwärmtes Strömungsmittel, wie Wasser, in Wärmeaustauschbeziehung mit der Bodenschicht 18 bzw. dem Wärmeableitungsmittel 20 zu bringen, und zwar auch im Zusammenhang mit einem Flachdach. Das Strömungsmittel kann auch das Abgas der Brennstelle direkt sein und durch ein geschlossenes Rohrsystem durch die Bodenschicht geleitet werden. Überdies ist es möglich, das Rohrsystem in unmittelbarer Nähe und weitgehend direktem Wärmekontakt mit dem Wärmeableitungsmittel 20 anzuordnen. In diesem Zusammenhang ergibt sich bei einem abgasdurchströmten Rohrsystem ein hervorragender direkter und durch die Bodenschicht geschützter Wärmeaustausch. Dabei sollte jedoch erziehlt werden, daß die Oberflächentemperatur im angrenzenden Bodenschichtbereich etwa 30 bis 35° C nicht überschreitet, was durch bekannte, witterungsbeständige und für den Erdeinbau geeignete Zement-Asbestprofile ohne weiteres erreicht werden kann.

Die Erfindung ermöglicht ein sehr einfaches, preiswertes Erstellen äußerst vorteilhafter Energiedächer, die erstmals ökologische und ökonomische Gesichtspunkte in hervorragend wirksamer Weise kombinieren. Die Detailgestaltung eines solchen Energiedaches ist vielfältig variabel und kann an die jeweiligen Einbauverhältnisse sowie -erfordernisse angepaßt werden. Wichtig ist jedoch dabei, daß eine normalerweise relativ dünne, vorzugsweise begrünbare Bodenschicht-Dachabdeckung insgesamt als wärmeleitender Wärmeabsorber sowie -speicher ausgenutzt wird, dem in bedarfsgerechter Weise Wärmeenergie als Primärenergie und/oder als Wärmerückgewinnungsenergie entzogen wird. Der mögliche
Pflanzenbewuchs der Bodenschicht kann hinsichtlich der Art und
Dichte so gewählt werden, daß sich optimale energetische Verhältnisse und gegebenenfalls weitere Verbesserungen bezüglich
einer speichernden Wärmeabsorption ergeben.

Anwaltsakte 1479/4907

Anmelder: Jens Drefahl, Amselweg 18a, 6458 Rodenbach 2

0053746

Verfahren und Einrichtung zum Optimieren

des Wärmehaushalts von Gebäuden


## Patentansprüche

1. Verfahren zum Optimieren des Wärmehaushalts von Gebäuden mit Flach- oder Schrägdächern, die oberhalb einer Dachhaut mit einer befeuchtbaren, vorzugsweise begrünbaren, Bodenschicht abgedeckt sind, dadurch gekennzeichnet, daß die Bodenschicht als wärmeleitender Wärmeabsorber sowie -speicher für von aussen auftreffende Wärmeenergie sowie gegebenenfalls für aus dem Gebäude, insbesondere über die Dachhaut, abfließende Wärmeenergie eingesetzt und ihr für Heizzwecke und/oder zum Kühlen des Gebäudes Wärmeenergie als Primärenergie und/oder als Rückgewinnungsenergie gezielt entzogen wird.

2. Verfahren nach Anspruch 1, dadurch gekennzeichnet, daß die entzogene Wärmeenergie gespeichert wird.

3. Verfahren nach Anspruch 1 oder 2, dadurch gekennzeichnet, daß die entzogene Wärmeenergie mittels eines Wärmepumpensystems auf ein höheres Temperaturniveau gebracht wird.

4. Verfahren nach einem oder mehreren der Ansprüche 1 bis 3, dadurch gekennzeichnet, daß das Entziehen der Wärmeenergie umwelt- und/oder bedarfsabhängig gesteuert bzw. geregelt wird.

5. Verfahren nach einem oder mehreren der Ansprüche 1 bis 4, dadurch gekennzeichnet, daß der wärmeleitenden Bodenschicht an bestimmten Bereichen Wärmeenergie entzogen wird.

6. Verfahren nach einem oder mehreren der Ansprüche 1 bis 5, dadurch gekennzeichnet, daß der Bodenschicht Wärmeenergie von Verlustwärme abgebenden anderen Gebäudeteilen gezielt direkt oder indirekt zugeleitet wird.

7. Verfahren nach Anspruch 6, dadurch gekennzeichnet, daß im Kamin- bzw. Schornsteinbereich entstehende Verlustwärme über die Abgase der Bodenschicht zugeführt und/oder auf ein Strömungsmedium, insbesondere Luft, übertragen und mittels dieser der Bodenschicht zugeleitet wird.

8. Verfahren nach Anspruch 7, dadurch gekennzeichnet, daß abgaserwärmte Luft insbesondere unter Ausnutzung ihrer thermisch bedingten Eigenströmung direkt unterhalb der Bodenschicht und in Wärmeaustauschbeziehung hiermit gleichmäßig verteilt durch eine Dränage bzw. Luftschicht geleitet wird.

9. Einrichtung zum Optimieren des Wärmehaushalts von Gebäuden mit Flach- oder Schrägdächern, gekennzeichnet durch eine Dachabdeckung mit einer befeuchtbaren und als wärmeleitender Wärmeabsorber sowie -speicher arbeitenden Bodenschicht (18) und durch ein mit dieser in direktem Wärmekontakt befindliches Wärmeableitungsmittel (20).

10. Einrichtung nach Anspruch 9, gekennzeichnet durch ein in die Bodenschicht integriertes und von einem Wärmeableitungsmedium, wie gefriergeschütztem Wasser, durchströmtes Rohrsystem als Wärmeableitungsmittel (20).

11. Einrichtung nach Anspruch 10, gekennzeichnet durch ein an verteilten Teilbereichen Wärmeenergie entziehendes Rohrsystem (20).

12. Einrichtung nach Anspruch 11, gekennzeichnet durch ein schlangenförmiges Rohrsystem (20).

13. Einrichtung nach Anspruch 10, gekennzeichnet durch ein großflächiges, plattenförmiges Wärmeableitungsmittel unterhalb der Bodenschicht (18).

14. Einrichtung nach einem oder mehreren der Ansprüche 9 bis 13, gekennzeichnet durch die Wärmeleitung begünstigende Glieder oder Stoffe in der Bodenschicht.

15. Einrichtung nach Anspruch 14, gekennzeichnet durch metallische Bodenschichteinlagen als wärmeleitende Glieder.

16. Einrichtung nach Anspruch 15, dadurch gekennzeichnet, daß die Bodenschichteinlagen mit dem Wärmeableitungsmittel verbunden sind.

17. Einrichtung nach Anspruch 16, dadurch gekennzeichnet, daß die Bodenschichteinlagen als Rippen eines Rohrsystems ausgebildet sind.

18. Einrichtung nach einem oder mehreren der Ansprüche 9 bis 17, dadurch gekennzeichnet, daß die nach außen weisende Oberfläche (18-1) der Bodenschicht (18) unter einem günstigen Einfallswinkel für das Absorbieren von Solarenergie ausgerichtet ist.

19. Einrichtung nach Anspruch 18, dadurch gekennzeichnet, daß insbesondere bei Flachdächern die nach außen weisende Oberfläche (18-1) schräg zur Dachhaut (12) verläuft.

20. Einrichtung nach Anspruch 19, dadurch gekennzeichnet, daß die nach außen weisende Oberfläche (18-1) sägezahnartig abgestuft angeordnet ist.     - 4 -

21. Einrichtung nach Anspruch 20, dadurch gekennzeichnet, daß die Stufen der Sägezahnform durch Wärmeableitungsmittel (20-1) formstabilisiert sind.

22. Einrichtung nach Anspruch 20, dadurch gekennzeichnet, daß ein die Bodenschicht (18) aufnehmender Bodenschichtträger (16-1) sägezahnförmig ausgebildet ist.

23. Einrichtung nach Anspruch 22, dadurch gekennzeichnet, daß der sägezahnförmige Bodenschichtträger als Wärmeableitungsmittel ausgebildet ist.

24. Einrichtung nach einem oder mehreren der Ansprüche 9 bis 23, dadurch gekennzeichnet, daß bei Schrägdächern die Wärmeableitungsmittel (20, 20-1) und/oder der Bodenschichtträger (16, 16-1) für die Bodenschicht (18) abrutschhemmend ausgebildet sind.

25. Einrichtung nach einem oder mehreren der Ansprüche 9 bis 24, dadurch gekennzeichnet, daß die Bodenschicht (18) oberhalb einer über der Dachhaut (12) befindlichen Dränage (14) angeordnet ist.

26. Einrichtung nach Anspruch 25, gekennzeichnet durch ein wasserdurchlässiges, vorzugsweise filterndes, Wärmeableitungsmittel als Trennung zwischen der Bodenschicht (18) und der Dränage (14).

27. Einrichtung nach einem oder mehreren der Ansprüche 9 bis 26, gekennzeichnet durch eine das Wärmeableitungsmittel (20) mit Wärmeverbrauchern verbindende Heizzentrale (28) und ein diese in Abhängigkeit von Betriebsparametern ($S_1$, $S_2$, $S_3$), wie der Temperatur der Bodenschicht bzw. des Wärmeableitungsmediums, betätigendes Steuer- oder Regelgerät (30).

28. Einrichtung nach Anspruch 27, gekennzeichnet durch eine Heizzentrale (28) mit einem Wärmespeicher und/oder einem Wärmeaustauscher und/oder einer Wärmepumpe.

29. Einrichtung nach einem oder mehreren der Ansprüche 9 bis 28, gekennzeichnet durch ein durch Verlustwärme erwärmtes Strömungsmittel durch die Bodenschicht (18) und/oder durch eine darunter befindliche Dränage (14) bzw. Luftschicht leitendes Rohrsystem (40, 42, 44).

30. Einrichtung nach Anspruch 29, gekennzeichnet durch einen Abgas/Luft-Wärmeaustauscher (40) in einem Kamin- bzw. Schornsteinbereich mit einem Frischlufteinlaß (42) und einem in die Dränage (14) bzw. Luftschicht einmündenden und/oder durch die Bodenschicht (18) geführten Strömungsverteiler (44).

31. Einrichtung nach Anspruch 30, gekennzeichnet durch einen aufsteigenden Wärmeaustauscher (40) mit einem unteren Frischlufteinlaß (42) sowie einem oberen, in eine schräg aufsteigende Dränage (14) bzw. Luftschicht unten einmündenden Strömungsverteiler (44) und durch einen oberen Luftauslaß (46) der Dränage (14) bzw. Luftschicht.

32. Einrichtung nach Anspruch 29, gekennzeichnet durch ein Abgas als das Strömungsmittel aus einem Kamin- bzw. Schornsteinbereich leitendes feuerfestes, gasdichtes und witterungsbeständiges Rohrsystem.

33. Einrichtung nach einem oder mehreren der Ansprüche 29 bis 32, gekennzeichnet durch eine thermisch bedingte Eigenströmung und/oder eine durch Zusatzglieder aufgeprägte Zwangsströmung des Strömungsmittels.

34. Einrichtung nach einem oder mehreren der Ansprüche 29 bis 33, gekennzeichnet durch ein in unmittelbarer Nähe des Wärmeableitungsmittels (20) verlaufendes und/oder mündendes Rohrsystem.

35. Einrichtung nach einem oder mehreren der Ansprüche 9 bis 34, gekennzeichnet durch eine die Wärmeabsorption der Bodenschicht (18) zulassende oder fördernde und eine insbesondere windbedingte Oberflächenauskühlung der Bodenschicht (18) reduzierende Bepflanzung (26).

36. Anwendung einer mit der oberseitigen Bodenschicht eines begrünbaren Daches in Wärmekontakt zu bringenden üblichen Wärmegewinnungsanlage zum gezielten Abziehen von nutzbarer Wärmeenergie aus der Bodenschicht.

FIG. 1

FIG. 2

FIG. 3

FIG. 4

FIG. 5